# FASCICULE DE BREVET EUROPEEN

(11) **EP 0 506 588 B1**
(45) Date de publication et mention de la délivrance du brevet: **13.12.1995**
(21) Numéro de dépôt: 92420090.0
(22) Date de dépôt: 25.03.1992
(51) Int. Cl.: B01D 53/00, B01D 53/34, C01G 43/06

(54) **Procédé de traitement de gaz à base de fluor électrolytique et pouvant contenir des composés uranifères**
Verfahren zur Behandlung von Gasen aus der elektrolytischen Herstellung von Fluor, die Uranverbindungen enthalten können
Process for treating gases resulting from the electrolytic production of fluor, which may contain uranium compounds

(30) Priorité: 27.03.1991 FR 9104451
(43) Date de publication de la demande: 30.09.1992
(73) Titulaire: COMURHEX Société pour la Conversion de l'Uranium en Métal et Hexafluorure, F-78140 Velizy Villacoublay (FR)
(72) Inventeur: Nicolas, François, F-84100 Orange (FR)
(74) Mandataire: Dubois-Chabert, Guy

(56) Documents cités:
- FR-A- 2 371 950
- US-A- 3 425 812
- US-A- 3 925 536

## Description

### DOMAINE TECHNIQUE

L'invention concerne un procédé de traitement d'un gaz à base de fluor, obtenu par électrolyse de bains contenant de l'acide fluorhydrique et pouvant contenir des composés uranifères gazeux comme l'hexafluorure d'uranium. Ce procédé permet de récupérer séparément les produits composant ce gaz, par exemple l'acide fluorhydrique entraîné lors de l'électrolyse, ou l'hexafluorure d'uranium gazeux provenant de son propre procédé d'obtention.

### ETAT DE LA TECHNIQUE

On sait que le fluor gazeux est généralement obtenu par électrolyse d'acide fluorhydrique anhydre en solution dans un bain de fluorures fondus, que le fluor ainsi produit entraîne une quantité de l'ordre de 5 à 15% volumique d'HF due à la pression partielle dudit HF dans le bain à la température d'électrolyse, et que cet HF peut être une impureté gênante dans les utilisations ultérieures du fluor.

On sait également que, parmi les utilisations du fluor, ce dernier sert à brûler des composés solides uranifères pour obtenir l'hexafluorure d'uranium gazeux. Ces composés solides sont principalement le tétrafluorure d'uranium (UF₄), mais aussi les oxydes ou oxyfluorures où U est à l'état IV ou VI.

Une telle combustion est généralement effectuée en présence d'un excès de fluor (6 à 8 % par rapport à U) d'abord dans un réacteur primaire suivi d'un cristallisoir (condenseur) à UF₆, les composés non transformés ou imbrûlés (environ 5 % de l'uranium engagé) étant ensuite épuisés dans un réacteur secondaire suivi également d'un cristallisoir à UF₆; l'hexafluorure d'U pur est condensé à l'état solide dans les cristallisoirs à l'aide d'un froid pouvant atteindre -30° C. A cette température, HF n'est pas condensé à l'état liquide compte tenu de sa faible pression partielle.

Après cette combustion et cette cristallisation, on récupère un résidu gazeux comprenant le fluor excédentaire, l'acide fluorhydrique provenant de l'électrolyse qui n'intervient pas dans la combustion, de l'hexafluorure d'uranium non condensé et des gaz incondensables comme l'oxygène provenant des oxydes introduits et/ou de l'azote provenant de diverses purges des circuits gazeux.

Habituellement, ce résidu gazeux est traité, après filtration soigneuse et passage dans un piège à froid anti-retour (à environ -15°C) par abattage dans une colonne à l'aide d'une solution basique, potassique généralement, qui laisse tout le fluor en solution sous forme de fluorure et qui précipite l'uranium sous forme d'uranate souillé de fluorure, lequel uranate ne peut pas être récupéré sans subir un traitement complet et long de conversion.

La solution de fluorure est à son tour généralement traitée par de la chaux qui précipite du fluorure de calcium exempt d'uranium, pouvant être rejeté après filtration, et qui régénère de la potasse prête à être recyclée.

On voit que le traitement de ce résidu est long et difficile, qu'il condense des produits à forte valeur (UF₆, F₂, HF) sous des formes dégradées ou irrécupérables, qu'il consomme à titre d'appoint de la potasse qui est un réactif cher, et qu'il y a toujours un risque que le fluorure de calcium rejeté soit pollué par de l'uranium. De plus, tout le fluor se retrouve sous forme de fluorures rejetés ce qui représente une quantité d'effluents importante et coûteuse à stocker, de même qu'une perte de fluor également coûteuse.

### DESCRIPTION DE L'INVENTION

Pour pallier ces inconvénients, la demanderesse a mis au point un procédé de traitement de gaz à base de fluor contenant aussi d'autres composés gazeux incondensables dans les conditions du procédé et contenant de l'acide fluorhydrique et d'autres composés gazeux, comme les composés uranifères, condensables dans les conditions du procédé, selon lequel
- on refroidit fortement ledit gaz à une température de -78°C (+-)3°C pour condenser HF et les autres composés condensables, pour obtenir séparément d'une part du fluor gazeux et des gaz incondensables qui sont évacués, d'autre part de l'acide fluorhydrique condensé liquide contenant en solution et en suspension d'autres composés condensés,
- on filtre la suspension obtenue précédemment pour séparer les condensats solides de la solution à base d'HF liquide anhydre.

On voit que ce procédé permet de récupérer séparément chacun des composants du mélange gazeux initial sous une forme noble directement réutilisable.

Le gaz de départ à base de fluor est en général le gaz résiduel, dépoussiéré, anhydre, sortant du condenseur secondaire d'obtention d'hexafluorure d'uranium. Il contient, comme cela a été vu, du fluor excédentaire par rapport à la stoëchiométrie d'obtention d'UF₆, de l'acide fluorhydrique anhydre gazeux provenant de l'électrolyse d'obtention du fluor, de l'hexafluorure d'uranium gazeux non piégé dans le cristallisoir secondaire et des gaz incondensables dans les conditions du présent procédé (O₂ et N₂ principalement).

A titre indicatif, on peut donner des fourchettes de compositions volumiques habituellement observées :
HF 10 à 50%, UF₆ 3 à 0,2%, N₂ 10 à 30%, O₂ 5 à 40%, F₂ 30 à 10%.

L'invention consiste donc, dans un premier temps, à refroidir fortement le gaz pour condenser HF anhydre à l'état liquide. La température utilisée dépend de la pression partielle d'HF dans le mélange gazeux, mais on évite d'une part d'atteindre la température de cristallisation de l'HF (-83°C), d'autre part d'utiliser une température supérieure à celle utilisée dans le cristallisoir (secondaire) d'où sort le gaz à traiter. On utilise une température de - 78°C ± 3°C, et de préférence une température de - 80°C; si on utilise une température inférieure, on risque de condenser HF solide et de colmater l'installation, tandis qu'à une température trop élevée le rendement de condensation d'HF est insuffisant.

Pour effectuer ce refroidissement, tous types d'échangeurs ou condenseurs, où un fluide frigoporteur et le gaz à traiter ne sont pas en contact, conviennent. On peut ainsi utiliser des échangeurs tubulaires ou à plaque dans lesquels l'HF condensé ruisselle sur la surface d'échange de façon à entraîner l'UF₆ solide condensé. Pour cela, les surfaces d'échange sont préférentiellement verticales.

Il est intéressant de limiter le plus possible l'écart entre la température la plus élevée et la température la plus basse du fluide frigoporteur lors de l'échange avec le gaz à traiter. C'est pourquoi on préfère opérer de telle façon que, dans le circuit de fluide frigoporteur, on soit en permanence en présence des phases liquide et gazeuse à la température de refroidissement choisie. On utilise généralement des hydrocarbures fluorés connus sous la marque déposée Fréons. Il est avantageux que ledit circuit soit une enceinte entièrement close et étanche, possède un vase d'expansion et reste sous pression, que le fluide frigoporteur ait une courbe pression-température de vaporisation compatible à la fois avec la température de refroidissement choisie et avec des pressions raisonnables pouvant atteindre 25 à 40 bar et que l'on apporte les frigories au fluide frigoporteur à l'aide d'un fluide frigorigène distinct, par exemple de l'azote liquide circulant dans un circuit distinct muni d'un échangeur. Ainsi le fluide frigoporteur assurant la condensation est séparé et isolé du fluide frigorigène assurant l'évacuation des calories.

Lors de ladite opération de refroidissement, le mélange du fluor gazeux excédentaire (pouvant contenir quelques traces d'HF non condensé) et des gaz incondensables est évacué pour être réutilisé tel quel ou après compression; ou bien il peut passer dans une colonne de lavage à la potasse, comme décrit plus haut, on récupère alors le fluor sous forme de fluorure de potassium non pollué commercialisable; ou encore il peut être directement traité par de la chaux pour rejeter un fluorure de calcium insoluble. Les gaz incondensables exempts de fluor peuvent être ainsi rejetés.

L'acide fluorhydrique et l'hexafluorure, quant à eux, sont condensés respectivement sous forme liquide et solide; l'acide ruisselle sur les surfaces d'échange du circuit du fluide frigoporteur en entraînant les particules solides d'hexafluorure. On obtient une suspension d'UF₆ solide dans HF liquide, ce dernier contenant également une légère quantité d'UF₆ en solution due à une très faible solubilité résiduelle; on maintient ladite suspension à basse température pour éviter la solubilisation de UF₆ solide dans HF.

S'il se produit des accumulations de solide (UF₆) dans le condenseur, il suffit d'élever sa température vers 60 à 80°C pour sublimer UF₆ et nettoyer l'appareil.

Dans l'étape suivante, selon l'invention, la suspension maintenue à basse température est filtrée pour retenir le solide en suspension (UF₆) et évacuer l'HF liquide qui peut être utilisé tel quel, dans la mesure où sa faible teneur résiduelle en UF₆ soluble n'est pas gênante.
La filtration se fait aisément sur tous types de matériaux poreux résistant au milieu (HF anhydre, UF₆...) ayant en général une porosité d'environ 20 »m; elle est immédiate, sa vitesse dépassant généralement 5 m³/m².h, voire 15 m³/m².h. Les matériaux frittés conviennent bien (par exemple les bougies filtrantes), mais également les toiles au besoin en plusieurs épaisseurs, les matelas de fibres....... Comme matériaux, on peut utiliser les métaux, les aciers ordinaires, inox, les alliages à base de Cu, Ni, Cr (monel...) etc.., mais encore les composites, les céramiques, les matériaux synthétiques (téflon)....

L'UF₆ pur retenu sur le filtre est, comme précédemment, récupéré par sublimation entre 60 et 80° C et acheminé vers un cristallisoir pour être ensuite conditionné comme habituellement. On récupère généralement à ce stade plus de 99,5 % de l'UF₆ présent dans les gaz résiduels à traiter.

Si on souhaite améliorer la pureté de l'HF liquide récupéré à la filtration et contenant encore de l'UF₆ résiduel soluble, on peut avantageusement, selon l'invention, vaporiser ledit HF vers 20 à 30°C puis le faire passer à travers un lit de charbon actif qui fixe la totalité de l'UF₆ restant en formant une combinaison stable avec le carbone. Le carbone fixe habituellement entre 70 % et 130 % de son poids en élément uranium. Ce traitement de purification permet d'obtenir un HF contenant moins de 10 ppm d'U, typiquement moins de 1 ppm d'U, voire généralement moins de 0,5 ppm.

Habituellement, le charbon actif présente une granulométrie de 2 à 10 mm pour éviter tout perte de charge excessive et favoriser le transit du gaz à épurer, de même qu'une bonne porosité d'accès et une surface spécifique suffisante pour obtenir une bonne efficacité. Avant usage, il est préférable de le désorber à chaud sous vide (≃ 140°C) pour éliminer toute trace d'air et d'humidité.

Après fixation, le lit de charbon actif est chauffé vers 140° C sous dépression pour chasser et récupérer l'HF qui a été adsorbé par le carbone lors de la fixation; le carbone, après désorption, est traité chimiquement pour détruire la combinaison stable entre UF₆ et le carbone et récupérer l'uranium. Ce traitement peut être soit une hydrolyse par H₂O pour obtenir UO₂F₂ soluble, ou en milieu légèrement basique, soit en milieu acide (par exemple HNO₃). Le traitement de récupération peut également consister en une combustion du C pour obtenir une cendre uranifère récupérable.

Le lit de charbon actif, habituellement contenu dans une colonne, est avantageusement équipé d'un serpentin permettant soit de le refroidir lors du passage de l'HF gazeux, une partie de ce dernier étant adsorbé sous forme condensée liquide sur le carbone avec un dégagement de chaleur correspondant à la condensation, soit de le réchauffer pour désorber ledit HF adsorbé.

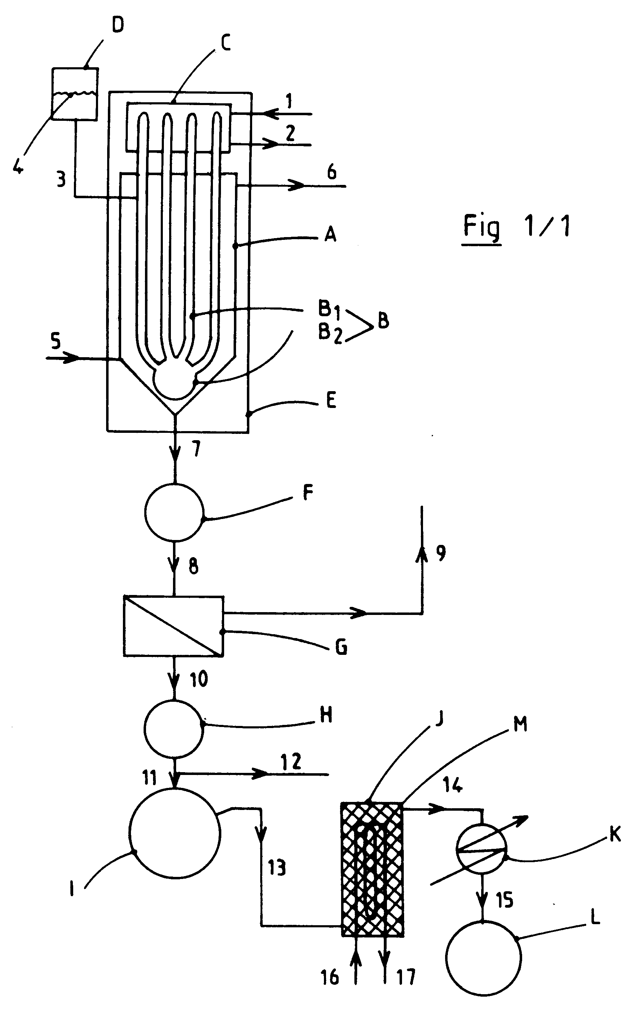

La figure 1/1 illustre le procédé selon l'invention; elle comporte en particulier le dispositif avantageux de condensation et le traitement additionnel de purification de l'HF recueilli.
A représente l'enceinte du condenseur-échangeur, dans lequel pénètre en (5) le gaz résiduel à traiter et duquel sort en (6) le fluor épuré et les gaz incondensables et en (7) HF liquide anhydre et UF₆ solide en suspension.
B représente l'enceinte close de fluide frigoporteur, sorte de bouilleur, constitué de tubes verticaux (B1) d'échange de chaleur, reliés entre eux par un collecteur (B2) et d'un récipient d'expansion (D) comportant une interface liquide-gaz (4) et relié à l'enceinte close (B) par un tube (3). Dans l'enceinte close, il y a toujours en présence les phases liquide et gazeuse du fluide frigoporteur de façon à avoir une température de condensation constante. Ladite enceinte close est sous pression. Les surfaces d'échange des tubes verticaux sont auto-nettoyées par le ruissellement de l'HF liquide condensé qui entraîne les particules solides d'UF₆ condensé en suspension.
C représente un dispositif échangeur assurant la fourniture de frigories au liquide frigorigène contenu dans l'enceinte (B). En l'occurence, il s'agit d'un échangeur massif dans lequel sont implantés les tubes (C) et un circuit distinct pour le fluide frigorigène (par exemple azote liquide) qui y rentre en (1) et en sort en (2).
E représente une enveloppe calorifuge englobant le condenseur (B) et l'échangeur (C).
F représente une capacité de stockage intermédiaire recevant le condensat (7), suspension d'UF₆ solide dans HF liquide, issu du condenseur (A).
G représente l'enceinte de séparation liquide-solide, séparation effectuée par exemple par des bougies d'acier inox fritté; elle est alimentée en (8) par la suspension stockée en (F). Il en sort en (10) de l'HF liquide contenant un résidu d'UF₆ en solution (solubilité résiduelle d'UF₆ dans HF liquide) qui est stocké dans la capacité intermédiaire (H); l'UF₆ retenu sur les bougies est évacué épisodiquement en réchauffant l'enceinte pour le sublimer, le gaz est acheminé par (9) vers les cristallisoirs habituels qui condensent UF₆ pur (non représentés).

L'HF contenu dans (H) peut être évacué par (12) pour être utilisé tel quel, sinon il peut être purifié. Pour cela :
I représente une étuve de vaporisation d'HF alimentée par (11) à partir du réservoir (H); il en sort par (13) de l'HF et de l'UF₆ gazeux.
J représente une colonne d'absorption remplie de charbon actif en granulé dans lequel est noyé un serpentin (M) avec une entrée (16) et une sortie (17) de fluide de refroidissement ou de chauffage. Il en sort en
(14) de l'HF gazeux rigoureusement pur (sa teneur en U peut aisément ne pas dépasser 0,1 ppm) qui est condensé en (K) pour être stocké et mis à disposition en (L) via (15). Le charbon actif, une fois saturé en UF₆, est chauffé à l'aide du serpentin (M) pour désorber et récupérer exclusivement HF, UF₆ restant solidement lié au carbone. Il ne reste plus qu'à vidanger le charbon actif pour le traiter comme cela a été vu.

On voit donc que, selon l'invention, on peut récupérer séparément :
. du fluor non pollué par U ou HF, mais contenant des gaz incondensables; il peut être utilisé tel quel, ou bien être neutralisé pour donner un rejet solide non pollué.
. de l'HF pur, exempt d'uranium, recyclable par exemple à l'électrolyse du fluor ou pour l'obtention d'UF₄.
. de l'UF₆ de qualité marchande.

Ainsi le procédé selon l'invention permet de réduire considérablement la quantité de fluorures rejetés et le risque de leur pollution par l'uranium.

### EXEMPLE

Cet exemple illustre le traitement en continu de gaz de queue issus d'un procédé de production d'UF₆ obtenu par combustion d'UF₄ dans le fluor. Les caractéristiques de cette combustion sont les suivantes :
. Fluor teneur en HF = 7% (volume)
- Débit :: 300 kg/h

. UF₄

| | |
|---|---|
| teneur en UF₄ | 94.97% (poids) |
| UO₂ | 2 % " |
| UO₂F₂ | 3 % " |
| H₂O | 0,03% " |

L'UF₆ gazeux produit est cristallisé dans des cristallisoirs en série, dont le plus froid est à -25°C, à raison de 2,52 t/h.

Le résidus gazeux (gaz de queue) sortant du cristallisoir a les caractéristiques suivantes :

| | |
|---|---|
| débit : | 43,2 kg/h |
| température : | 20°C |

Composition :

| | DEBIT | | PRESSION PARTIELLE hPa (mbar) |
|---|---|---|---|
| | kg/h | Nm3/h | |
| F2 | 5,4 | 3,2 | 101,6 |
| O2 | 12,9 | 9,0 | 285,6 |
| N2 | 10 | 8,0 | 252,8 |
| UF6 | 1,5 | 0,1 | 3,0 |
| HF* | 13,5 | 16,7 | 157,6 |
| Total | 43,3 | 37,0 | 800,6 |

| | | | |
|---|---|---|---|
| * Le degré d'association de HF est de 3 à cette température. | | | |

Il est traité dans une installation du type de celle décrite dans la figure 1.

Le condenseur (A), qui condense HF sous forme liquide et UF₆ sous forme solide, fonctionne à -80°C grâce à 50 l/h d'azote liquide introduit en (1) dans l'échangeur (C).
La phase gazeuse, sortant en (6), est à -80°C et a une pression totale de 790 hPa avec la composition suivante :

| | DEBIT | | PRESSION PARTIELLE hPa (mbar) |
|---|---|---|---|
| | kg/h | Nm3/h | |
| F2 | 5,4 | 3,2 | 124,1 |
| O2 | 12,9 | 9,0 | 349 |
| N2 | 10 | 8,0 | 308,9 |
| UF6 | 0 | 0 | 0 |
| HF | 0,7 | 0,8 | 8 |
| Total | 29,0 | 21,0 | 790 |

On voit qu'elle ne contient plus d'UF₆ et seulement quelques traces d'HF non condensées.
Ce flux gazeux, comme cela a été décrit, a été envoyé sur une tour de lavage à la potasse (non représentée) par l'intermédiaire d'un piège à froid (également non représenté) maintenu à -15°C et destiné à protéger le condenseur (A) de l'eau rétrodiffusée à partir de la colonne de lavage. Il est lavé à l'aide d'une solution de KOH dont la concentration évolue entre 250 et 100 g/l. La production de KF soluble est de 18,6 kg/h; après traitement par la chaux de la solution de KF, on a obtenu 12,5 kg/h de CaF₂ insoluble non pollué rejetable et régénéré de la potasse recyclable. Le KF non pollué obtenu pourrait également être utilisé en tant que tel.

Il sort également de la tour de lavage les gaz incondensables (O2, N2) à 30°C et sous 500 hPa, exempts de produits fluorés et rejetables à l'atmosphère.

La suspension recueillie en (7) a la composition suivante :

| | Débit (kg/h) |
|---|---|
| HF liquide | 12,8 |
| UF₆ soluble | 0,1 |
| UF₆ solide | 1,4 |

Elle est filtrée en (G) à -80°C, par gravité à travers des bougies en acier inox frittées et on récupère 12,7 kg/h d'HF contenant 0,5% d'U soit 0,09 kg UF₆/h en solution. L'UF₆ retenu sur les filtres à raison de 1,4 kg/h est imprégné par 5% d'HF.
Cet UF₆ filtré est récupéré par chauffage à +60°C pendant 15 h; l'UF₆ ainsi sublimé est envoyé par (9) vers la cristallisation principale. Pendant cette opération la suspension (7) est stockée en (F).
L'HF contenant UF₆ soluble est transféré dans le bouilleur (I) maintenu à +30°C. L'UF₆ gazeux obtenu passe à travers une colonne (J) remplie de charbon actif pour fixer UF₆.

L'HF purifié obtenu est condensé en (K) à +10°C, contient moins de 1 ppm d'U et est recyclable tel quel.

On voit que grâce au procédé de récupération selon l'invention, le rejet solide n'est au pire que de 12,5 kg/h de CaF₂ non pollué, alors que selon le procédé habituel, il aurait: été de 38,3 kg/h de CaF₂ pollué.

## Revendications

1. Procédé de traitement de gaz à base de fluor contenant aussi d'autres composés gazeux incondensables dans les conditions du procédé et contenant de l'acide fluorhydrique et d'autres composés gazeux, comme les composés uranifères, condensables dans les conditions du procédé, selon lequel
- on refroidit fortement ledit gaz à une température de -78°C (+-)3°C pour condenser HF et les autres composés condensables, pour obtenir séparément d'une part du fluor gazeux et des gaz incondensables qui sont évacués, d'autre part de l'acide fluorhydrique condensé liquide contenant en solution et en suspension d'autres composés condensés,
. on filtre la suspension obtenue précédemment pour séparer les condensats solides de la solution à base d'HF liquide anhydre.

2. Procédé selon la revendication 1, caractérisé en ce que la température de refroidissement est de - 80° C.

3. Procédé selon l'une quelconque des revendications 1 ou 2, caractérisé en ce que le refroidissement est effectué, dans un échangeur, en présence des phases liquide et gazeuse d'un fluide frigoporteur contenu dans un circuit clos et étanche.

4. Procédé selon l'une quelconque des revendications 1 à 3, caractérisé en ce que les frigories sont apportées au fluide frigoporteur par un fluide frigorigène, de préférence l'azote liquide, circulant dans un circuit distinct de celui du fluide frigoporteur et muni d'un échangeur.

5. Procédé selon l'une quelconque des revendications 1 à 4, caractérisé en ce que le refroidissement est effectué à l'aide de surfaces d'échange verticales sur lesquelles l'HF condensé liquide ruisselle en entraînant les autres composés condensés solides.

6. Procédé selon l'une quelconque des revendications 1 à 5, caractérisé en ce que le condensat solide retenu en filtration, quand il s'agit d'hexafluorure d'uranium, est chauffé pour être sublimé et récupéré.

7. Procédé selon l'une quelconque des revendications 1 à 6, caractérisé en ce que l'acide fluorhydrique récupéré lors de la filtration est épuré, après mise sous forme gazeuse, par passage à travers un lit de charbon actif qui adsorbe de l'HF et fixe les composés restés en solution dans ledit acide liquide, puis par condensation.

8. Procédé selon la revendication 7, caractérisé en ce que le composé resté en solution est l'hexafluorure d'uranium, et que le charbon actif qui a fixé ledit hexafluorure est traité chimiquement pour récupérer l'uranium contenu après avoir été chauffé pour désorber l'HF.

9. Procédé selon la revendication 8, caractérisé en ce que le charbon actif est traité par hydrolyse ou par un acide.

## Claims

1. Process for the treatment of fluorine-based gases also containing other uncondensable gaseous compounds under the conditions of the process and containing hydrofluoric acid and other gaseous compounds, such as uraniferous compounds, which can be condensed under the conditions of the process, according to which
said gas is strongly cooled at a temperature of -78 ± 3°C in order to condense HF and the other condensable compounds, to separately obtain on the one hand gaseous fluorine and uncondensable gases, which are discharged, and on the other condensed, liquid hydrofluoric acid containing in solution and in suspension other condensed compounds,
the suspension obtained is filtered beforehand in order to separate the solid condensates from the anhydrous liquid HF-based solution.

2. Process according to claim 1, characterized in that the cooling temperature is -80°C.

3. Process according to either of the claims 1 and 2, characterized in that cooling takes place in an exchanger in the presence of liquid and gaseous phases of a coolant contained in a closed, tight circuit.

4. Process according to any one of the claims 1 to 3, characterized in that the frigories are supplied to the coolant by a refrigerant, preferably liquid nitrogen, flowing in a circuit separate from that of the coolant and equipped with an exchanger.

5. Process according to any one of the claims 1 to 4, characterized in that cooling takes place with the aid of vertical exchange surfaces, on which trickles the liquid, condensed HF entraining the other solid, condensed compounds.

6. Process according to any one of the claims 1 to 5, characterized in that the solid condensate retained in filtration, in the case of uranium hexafluoride is heated in order to be sublimated and recovered.

7. Process according to any one of the claims 1 to 6, characterized in that the hydrofluoric acid recovered during filtration is purified, after bringing into gaseous form, by passing through an activated carbon bed, which adsorbs the HF and fixes the compounds which have remained in solution in said liquid acid and then by condensation.

8. Process according to claim 7, characterized in that the compound which has remained in solution is uranium hexafluoride and that the activated carbon which has fixed said hexafluoride is chemically treated to recover the uranium contained after heating in order to desorb the HF.

9. Process according to claim 8, characterized in that the activated carbon is treated by hydrolysis or by an acid.

## Patentansprüche

1. Verarbeitungsverfahren von Gas auf Fluorbasis, welches noch weitere unter den Verfahrensbedingungen nicht kondensierende gasförmige Bestandteile aufweist, und welches fluorwasserstoffhaltige Säure und andere gasförmige Bestandteile, wie uranhaltige Bestandteile, enthält, die unter den Verfahrensbedingungen kondensieren können, gemäß dem
- das genannte Gas zur Kondensierung von HF und den anderen kondensierbaren Bestandteilen rasch auf eine Temperatur von -78°C (+-) 3°C abgekühlt wird, um getrennt zu erhalten, einerseits gasförmiges Fluor und nicht kondensierende Gase, die abgeführt werden, und andererseits flüssig kondensierte fluorwasserstoffhaltige Säure, welche weitere kondensierte Bestandteile in Lösung und in Suspension enthält, und
- die so erhaltene Suspension gefiltert wird, um die festen Kondensate von der Lösung auf Basis von wasserfreiem flüssigen HF zu trennen.

2. Verfahren gemäß Anspruch 1,
**dadurch gekennzeichnet,**
daß die Abkühltemperatur -80°C beträgt.

3. Verfahren gemäß einem der Ansprüche 1 oder 2,
**dadurch gekennzeichnet,**
daß das Abkühlen in einem Austauscher bei Gegenwart flüssiger und gasförmiger Phasen eines Kälteträgerfluids, das in einem geschlossenen und dichten Kreislauf enthalten ist, geschieht.

4. Verfahren gemäß einem der Ansprüche 1 bis 3,
**dadurch gekennzeichnet,**
daß die Kilokalorien dem Kälteträgerfluid über ein Kühlmittel, bevorzugterweise flüssiger Stickstoff zugeführt werden, das in einem Kreislauf zirkuliert, der von dem des Kälteträgerfluids verschieden ist und mit einem Austauscher ausgerüstet ist.

5. Verfahren gemäß einem der Ansprüche 1 bis 4,
**dadurch gekennzeichnet,**
daß das Abkühlen mit Hilfe senkrechter Austauschoberflächen geschieht, auf denen das kondensierte flüssige HF herabrinnt, wobei es die anderen kondensierten festen Bestandteile mitnimmt.

6. Verfahren gemäß einem der Ansprüche 1 bis 5,
**dadurch gekennzeichnet,**
daß das durch Filtration zurückgehaltene feste Kondensat, wenn es sich um Uranhexafluorid handelt, erhitzt wird, um sublimiert und zurückgewonnen zu werden.

7. Verfahren gemäß einem der Ansprüche 1 bis 6,
**dadurch gekennzeichnet,**
daß die während der Filtration zurückgewonnene fluorwasserstoffhaltige Säure gereinigt wird, nachdem sie vergast worden ist, indem sie durch ein Aktivkohlebett hindurchgeleitet wird, welches HF absorbiert und die in der genannten flüssigen Säure verbliebenen Bestandteile durch Kondensation fixiert.

8. Verfahren gemäß dem Anspruch 7,
**dadurch gekennzeichnet,**
daß der in Lösung verbliebene Bestandteil das Uranhexafluorid ist, und daß die Aktivkohle, die das genannte Hexafluorid fixiert hat, chemisch behandelt wird, um das enthaltene Uran zurückzugewinnen, nachdem sie zur Desorption des HF erhitzt worden ist.

9. Verfahren gemäß Anspruch 8,
**dadurch gekennzeichnet,**
daß die Aktivkohle durch Hydrolyse oder mit einer Säure behandelt wird.
